# EUROPEAN PATENT SPECIFICATION

(11) **EP 4 463 634 B1**
(45) Date of publication and mention of the grant of the patent: **07.05.2025**
(21) Application number: 23712341.9
(22) Date of filing: 06.03.2023
(51) Int. Cl.: F04F 13/00

(54) **PUMPING SYSTEM**
PUMPSYSTEM
SYSTÈME DE POMPAGE

(30) Priority: 08.03.2022 GB 202203215
(43) Date of publication of application: 20.11.2024
(73) Proprietor: Weir Minerals Netherlands B.V., 5928 PH Venlo (NL)
(72) Inventor: STROEKEN, Johannes, 6043 JS Roermond (NL); VAN RIJSWICK, Rudolfus, 5973 PV Lottum (NL)
(74) Representative: MacLeod, Roderick William
(86) International application number: PCT/IB2023/052068
(87) International publication number: WO 2023/170542

(56) References cited:
- EP-A2- 3 807 497
- WO-A1-2018/085742
- US-A1- 2021 246 912

## Description

### Technical Field

The present invention relates to a pumping system. In particular, although not exclusively, the present invention relates to a pumping system for use in the mining and minerals processing industry, and particularly for use in a hydraulic ore hoisting system (HOHS).

### Background

In the minerals processing industry, one problem relates to transporting ore from underground or subsea locations to a surface level. A novel system for such transportation has been described in PCT application number PCT/IB2019/055957, in the name of Weir Minerals Netherlands B.V., and is referred to as an HOHS. Other types of HOHS are also available.

One type of HOHS comprises a Positive Displacement (PD) pump, which is used to displace a mixture of ore and water, referred to as ore slurry, into a riser via a Pressure Exchange Chamber (PEC) using a driving fluid. A slurry is a two-phase mixture (a liquid with solid particles suspended or otherwise located therein). A specific advantage of the HOHS as described in PCT/IB2019/055957 is the use of a PD pump, which delivers a pressure independent flowrate and allows the use of a driving fluid containing fine particles (typically smaller than 500 µm).

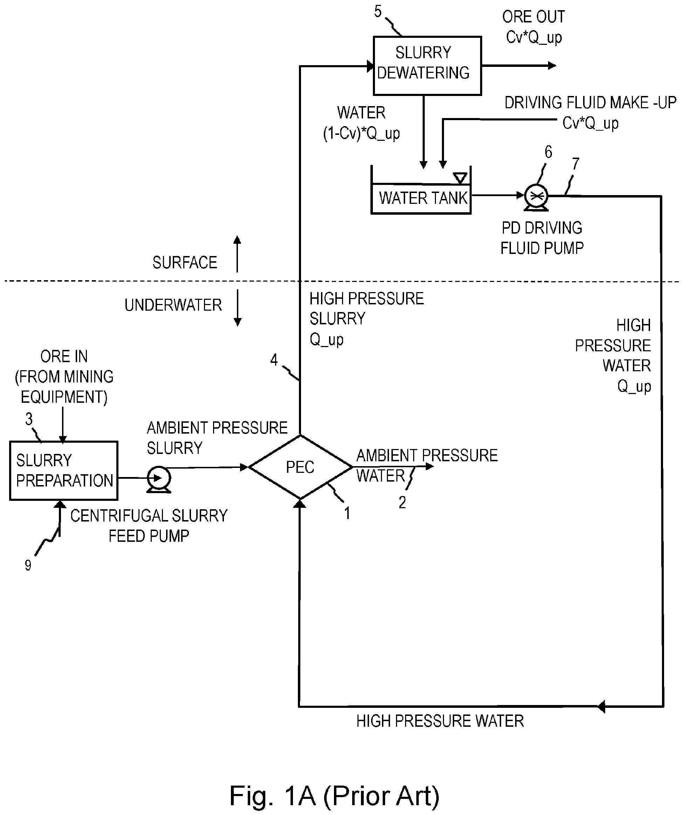

A typical high-level schematic diagram of the HOHS system for use in subsea applications is shown in Fig. 1A showing both the equipment used and, to some extent, the process flow. After the ore slurry is pumped through the riser 4 to the surface, the ore slurry is dewatered (at location 5), and the carrier fluid is re-used again by the PD pump 6 as driving fluid in high pressure line 7. In Fig. 1A, Cv is the volumetric concentration of solids, and Q_up is the total volumetric flowrate of the mixture of fluid and solids delivered to the surface. Additional fluid of the same volume as the removed ore (i.e. Cv x Q_up) is added to a surface driving fluid tank to maintain balanced volumes.

One challenge in the design of the HOHS system, particularly in maritime (subsea) applications, is that the ore input to the ore slurry preparation stage 3 is in the form of soft polymetallic nodules, typically between 10 and 200mm long. These soft nodules are easily broken, and once broken the fines that are produced are much more expensive to dewater and process than if the entire nodule was transport intact.

EP 3 807 497 discloses a hydraulic ore hoisting system using a positive displacement pump.

US 2021/246912 A1 discloses a pressure exchanger for gas processing that includes a rotor including rotor ducts extending parallel to an axis, a first end cover disposed at a first side of the rotor, and a second end cover disposed at a second side of the rotor.

WO 2018/085742 discloses apparatus and methods for reducing pressure exchanger manifold resonance. The apparatus includes a plurality of pressure exchangers each having a high-pressure inlet fluidly connected with a first manifold and a high-pressure outlet fluidly connected with a second manifold.

It is among the objects of an embodiment of the present invention to obviate or mitigate the above disadvantage or other disadvantages of the prior art or to provide a useful alternative to the prior art, or improved operation thereof.

The various aspects detailed hereinafter are independent of each other, except where stated otherwise. Any claim corresponding to one aspect should not be construed as incorporating any element or feature of the other aspects unless explicitly stated in that claim.

Reference in this specification to any prior publication (or information derived from the prior publication), or to any matter which is known, is not, and should not be taken as an acknowledgment or admission or any form of suggestion that the prior publication (or information derived from the prior publication) or known matter forms part of the common general knowledge in the field of endeavour to which this specification relates, or is even citable as prior art against this application.

### Summary of Disclosure

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect, there is provided a pumping system for pumping a medium comprising ore suspended in carrier fluid from an underground or underwater location to a surface at a raised level, the system comprising: (i) at least one pressure exchange chamber comprising a fluid container having a valve arrangement at each end and being located at a lower altitude than the raised level; (ii) a medium inlet at one end of the chamber operable to receive a low pressure medium for transport into the chamber; characterised by (iii) a filling pump located at an opposite side of the chamber to the medium inlet, and being operable to draw medium from the medium inlet at low pressure, through the chamber, and towards the filling pump to fill the chamber without the medium in the chamber having come into contact with the filling pump.

The medium may comprise a fluid having a different property to another fluid which is driven by the medium. The different property may be temperature, salinity, solid content.

The fluid container may comprise any convenient shape and having an inlet at one end and an outlet at another end. The fluid container may comprise a pipe. The pipe may have any convenient cross-sectional shape (in some embodiments the pipe has a generally circular cross-section) and any convenient aspect ratio (length to width). In some embodiments the pipe may be elongate.

The filling pump may comprise a centrifugal pump. Alternatively, the filling pump may comprise a positive displacement pump or another type of pump.

The filling pump is preferably in direct pressure connection (or in direct pressure relation) with the pressure exchange chamber driving fluid outlet such that reducing the pressure at the filling pump results in a reduced pressure at the pressure exchange chamber driving fluid outlet. In other words, the chamber and filling pump form a closed pressure system. In such a system, there is no opening to ambient that would allow fluid at ambient pressure to be drawn in instead of the medium.

The pumping system may further comprise a harvester coupled to the medium inlet for suppling medium thereto. The harvester may create the medium comprising ore suspended in carrier fluid.

A driving fluid pump (such as a positive displacement pump, or one or more centrifugal pumps) may be provided to drive the medium from the pressure exchange chamber(s) up a discharge riser to a surface level. The discharge riser may be located at an end of the pressure exchange chamber(s) opposite the driving fluid pump. The driving fluid pump may be coupled to the pressure exchange chamber via a driving fluid riser.

The harvester may comprise a hydraulic suction device operable to lift ore in the form of nodules from the sea bed and to mix the nodules with sea water to create the medium.

The nodules may comprise particles that are typically between 10mm and 200mm in length. The medium may comprise settling particles in a carrier fluid which mixture is referred to as a settling slurry.

The pumping system may comprise a plurality of pressure exchange chambers, each successively filled with the medium. Each pressure exchange chamber includes a fluid container, such as a pipe that is optionally elongate or extended in any convenient configuration, such as a helix, or orientation, such as horizontal, vertical, or at any desired angle. In some embodiments, the pipe length may be selected from the range of 20m to 400m.

The (or each) pressure exchange chamber may include a separator between driving fluid and the medium being pumped, or the driving fluid may be in direct contact with the medium being pumped.

A first valve arrangement is preferably located at one end of the pressure exchange chamber and comprises a driving fluid entry valve, a driving fluid exit valve, a compression valve, and a decompression valve. These valves are preferably suitable for use with high dynamic pressures (e.g. greater than 40 Bar (4MPa)) as there may be a significantly higher pressure above a valve (above the sealing point on the valve seat) than beneath the valve (below the sealing point on the valve seat).

These valves may comprise actuated valves.

A second valve arrangement is preferably located at an end of the pressure exchange chamber near to a pressurised discharge and comprises a pumped fluid (or medium) exit valve (also referred to as a discharge valve) and a pumped fluid (or medium) entry valve (also referred to as a suction valve). The pumped fluid entry and pumped fluid exit valves open in a pressure balanced situation when the pressure exchange chamber is properly decompressed or compressed respectively. These valves may comprise actuated valves or self-actuated valves.

The pumped fluid exit and entry valves are preferably suitable for use with high pressures (e.g. greater than approximately 40 Bar (4MPa)).

The driving fluid entry valve may be opened at the same time (or approximately the same time) as the pumped fluid exit valve, during which time the driving fluid exit valve and the pumped fluid entry valve remain closed.

Similarly, the pumped fluid entry valve may be opened at the same time (or approximately the same time) as the driving fluid exit valve, during which time the pumped fluid exit valve and the driving fluid entry valve remain closed.

The underwater location may be seabed or the bed of a lake or estuary.

By locating the filling pump at the opposite end of the pressure exchange chamber to the medium inlet (or the harvester), the medium (and particularly the nodules) does not come into contact with any moving or static part in the filling pump. In embodiments where a centrifugal pump is used, the impeller is particularly destructive to ore particles in the medium. In effect, the filling pump sucks the medium from the medium inlet (and the harvester if one is connected) and into the pressure exchange chamber. The second valve arrangement may be closed before the medium comes into contact with the filling pump. If nodules were allowed to contact the impeller (or any other part of the pump) there is a significant risk of the nodules breaking down into fine particles, which are more difficult and costly to dewater at the surface.

Another advantage of locating the filling pump at the opposite end of the fluid container to the medium inlet (or the harvester) is that it is easier to control the flow rate of the medium because relatively clean water is being pumped (rather than slurry).

Another advantage of locating the filling pump at the opposite end of the fluid container to the medium inlet is that it prevents or minimises wear of the filling pump by the medium being transported.

Another advantage of the medium not coming into contact with the filling pump is that a pump can be used that does not tolerate ore particles that may be suspended in the medium.

Another advantage of the medium not coming into contact with the filling pump is that when the medium comprises ore particles suspended in water, the pump essentially pumps water so that the pump performance matches theoretical pump curve performance more closely than when pumping slurry (ore suspended in water). This makes it easier to control the pump flow velocity.

Placing the feed pump downstream of the PEC is not normally possible in a land based system. This is because in a land based system, hydraulic losses in the suction system (between the pump inlet and the source of the medium) lower the pressure throughout the suction system, including at the inlet of the pump. If the pressure at the inlet of the pump drops to, or near, the vapour pressure of the medium, then cavitation will result. The vapor pressure at room temperature is near to absolute vacuum which means that the pressure reduction in the suction system is limited to approximately 1 bar (100kPa). When the suction losses are too high, the vapor pressure is reached locally in the suction system. Vapor bubbles are then formed which are transported in the flow. These bubbles violently collapse when the pressure is locally increased above the vapor pressure. This typically occurs in the pump. This process is called cavitation and limits operation of the pump as flow and pressure generation under cavitation conditions is limited and cavitation can be very destructive to the pump itself.

In land based pump system design, the pump is therefore located as close as possible to the medium source and the suction system is designed for minimum hydraulic losses. The objective is to have a NPSHA (Nett Positive Suction Head Available) of the suction system which is higher than the NPSHR (Nett Positive Suction Head Required) of the pump. As the atmospheric pressure at subsea is much higher than on land (1 bar per 10m depth), risk for cavitation is minimised or practically non-existent. Understanding of this physical difference allows the feed pump to be placed anywhere along the line from slurry preparation to water outlet of the pressure exchange chamber.

Another advantage of locating the filling pump at the opposite end of the chamber to the harvester is that it is easier to control the flow rate of the medium 32. The flow rate of a centrifugal pump is dependent on both the pressure load acting on the pump as well as the density of the mixture and the presence of particles in the mixture. To control the flow rate of the feed pump its flow rate needs to be measured with a flowmeter which value can be used as the actual value in a control loop of the centrifugal pump speed. Increase of centrifugal pump speed will result in increased pressure generation by the pump which will result in increase in flow rate.

A difficulty in prior art systems is the location of the flow sensor and the disturbances of the mixture composition on the control behaviour. Ideally the flowmeter should be positioned as close to the centrifugal pump as possible, typically downstream of the pump. In the prior art systems the flowmeter needs to be able to measure the flowrate of a mixture of water and solid particles. Although such flowmeters exist, accuracy is impacted by the presence of solids and furthermore they need to be wear resistant as well. Alternatively the flowmeter can be positioned downstream of the pressure exchange chamber where it measures a relatively clean water flow. A drawback of this approach is the long distance between the pump and the flowmeter and the possible presence of flow dampening devices in-between. This makes the downstream flow measurement indirect, limiting the bandwidth of the flow measurement, limiting speed of the flow control loop. When positioning the feed pump downstream of the pressure exchange chamber, the flowmeter can measure in a relatively clean environment directly up or downstream of the feed pump. The feed pump flow is only dependent on the pressure load on the pump and not of the mixture being transported and the pump only experiences a relatively clean fluid with relatively constant density without large solid particles. In control terminology this means less disturbances which allows a more accurate control response.

According to a second aspect there is provided a method of filling a pressure exchange chamber fluid container located at a low altitude and having a medium inlet coupled to one end of the fluid container and a driving fluid outlet coupled to the other end of the fluid container, the method comprising: (i) opening a medium entry valve at the medium inlet to fill the fluid container; (ii) using a filling pump located at an opposite end of the pressure exchange chamber to the medium inlet to create a lower pressure at the driving fluid outlet of the fluid container than at the medium inlet of the fluid container to draw in medium through the medium inlet without the medium in the fluid container coming into contact with the filling pump; and (iii) closing a valve to stop the intake of medium to the fluid container.

The method may include the step of opening a driving fluid outlet valve (at an opposite side of the pressure exchange chamber to the medium entry valve) after (or simultaneously with) opening the medium entry valve at the medium inlet.

The step of closing a valve to stop the intake of medium to the pressure exchange chamber may comprise closing one or both of a driving fluid outlet valve or the medium entry valve at the medium inlet. The driving fluid outlet valve may be closed first, or both valves may be closed simultaneously. Closing the driving fluid outlet valve first allows the medium entry valve to close with lower risk of medium being located on the valve seat.

As used herein, "ambient pressure" refers to the pressure surrounding the pressure exchange chamber at the medium inlet.

According to a third aspect there is provided a hydraulic ore hoisting system including the pumping system of the first aspect.

It will now be appreciated that a hydraulic ore hoisting system can be provided that minimises breakage of nodules by ensuring that a filling pump does not come into contact with the nodules being transported to a surface level. If the pumping system was at ground level then the filling pump may experience excessive cavitation, but by location the filling pump at the same (or similar) elevation to the pressure exchange chamber on a sea bed, the static head of the water above the pressure exchange chamber ensures that cavitation effects are reduced.

### Brief Description of Figures

These and other aspects will be apparent from the following specific description, given by way of example only, with reference to the accompanying drawings, in which:
Fig. 1A is a simplified schematic diagram of a prior art HOHS for maritime applications;
Fig. 1B is a simplified schematic diagram of an HOHS according to a first embodiment of the present invention;
Fig. 2 is a more detailed simplified schematic diagram of the pumping system of Fig. 1B, where the first embodiment uses only a single pressure exchange chamber, and where the pressure exchange chamber is located on a sea bed beneath a surface to which medium is to be pumped;
Fig. 3 is a simplified schematic diagram of part of the pumping system of Fig. 2, namely the harvester;
Fig. 4 is a simplified schematic diagram illustrating an alternative pressure exchange system having three pressure exchange chambers; and
Fig. 5 is a simplified schematic diagram of another embodiment of a pumping system, where the pumping system is land based and the pressure exchange chamber is located beneath an area from which medium is to be pumped.

### Detailed Description

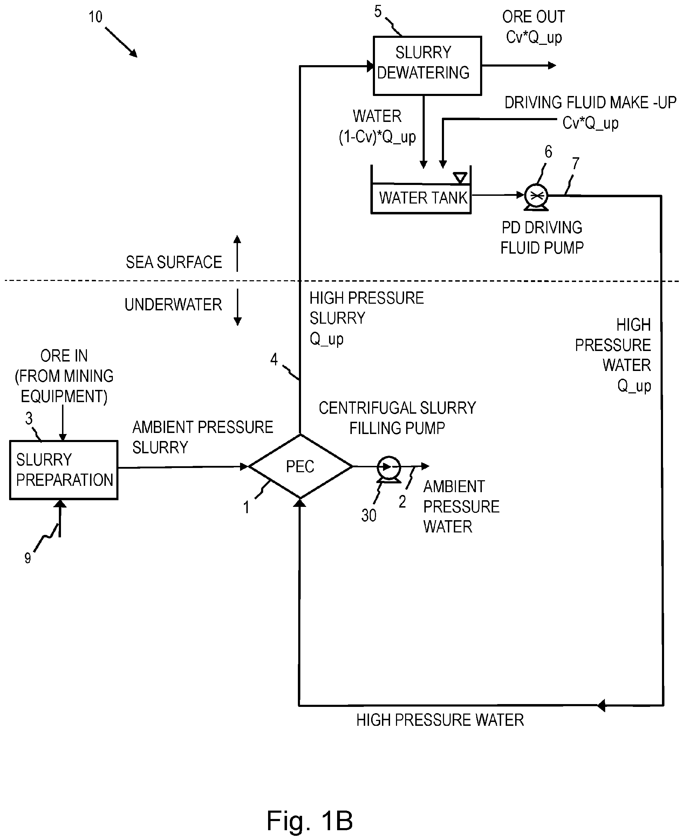

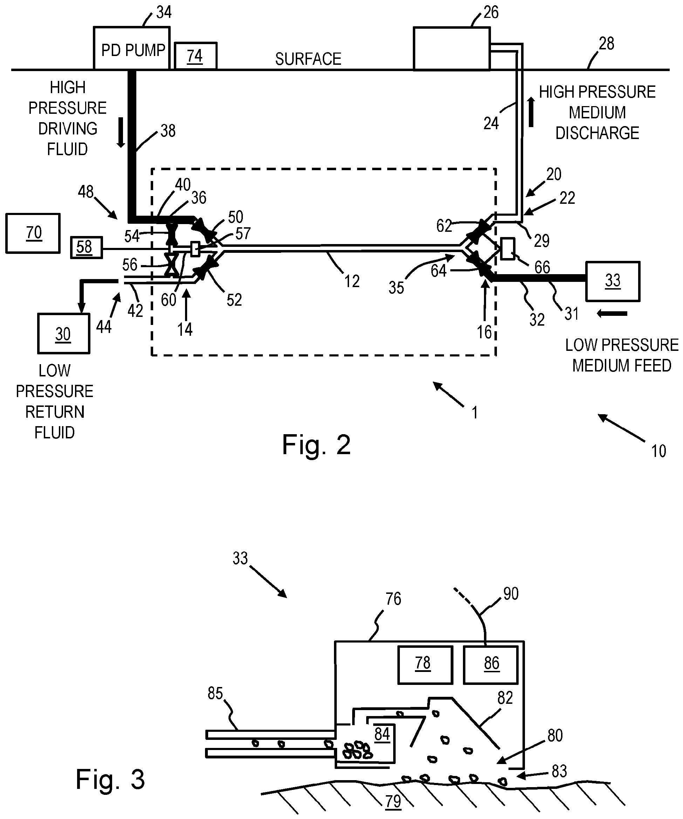

Reference is first made to Figs. 1B and 2, which are simplified schematic diagrams of a hydraulic ore hoisting system (HOHS) 10 according to a first embodiment of the present invention, including the pressure exchange chamber (PEC) 1. The HOHS 10 is used for underwater (in this embodiment seabed) mining activities. In Figs. 1B and 2, similar parts use the same reference numerals as Fig. 1A to illustrate that the primary difference is in the location of the centrifugal pump 30, which is at the downstream end of the PEC 1.

In typical embodiments, all of the PEC 1 is located at a lower altitude than a final delivery point at which a medium is to be delivered by the HOHS 10. In this embodiment, the medium comprises ore particles (also referred to as nodules) ranging in size from 10 to 200 mm located in a carrier fluid (a liquid carrier) to produce a slurry of entrained and suspended ore particles.

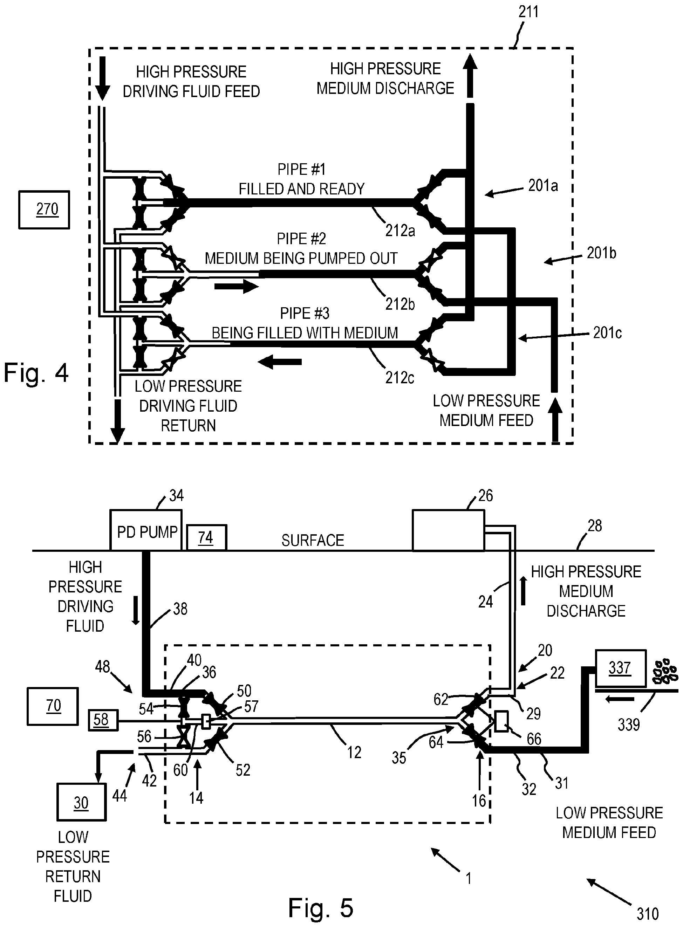

In this embodiment, the HOHS 10 is a subsea system, the PEC 1 is located at or near the sea bed, the ore comprises polymetallic nodules, and the liquid carrier comprises sea water. Other embodiments may be land based (as described below with reference to Fig. 5) or on a bed of a freshwater lake or an estuary.

The PEC 1 comprises a single fluid container (pipe) 12, which has a valve arrangement 14, 16 at each end thereof, referred to as a driving fluid valve arrangement 14 and a pumped medium valve arrangement 16.

A pressurised discharge 20 is provided at a delivery end 22 of the PEC 1. In this embodiment, the pressurised discharge 20 is an inlet to a pumped medium riser 24 that extends in a generally vertical direction from the delivery end 22 to a collection receptacle 26 at a surface 28. A medium outlet line 29 couples the pumped medium valve arrangement 16 and the pressurised discharge 20.

The pumped medium riser 24 may be coupled to (and extend downwards from) a vessel floating on the surface 28. The vessel may comprise a ship, a barge, or the like.

A filling mechanism 30 is provided, in the form of a centrifugal pump, which is operable to fill the pipe 12 with a medium 32 to be pumped to the surface 28. The centrifugal pump 30 fills the pipe 12 with medium 32 via a medium inlet line 31. The medium inlet line 31 couples to the pipe 12 at a medium inlet 35. Significantly, the centrifugal pump 30 is located at an opposite side of the PEC 1 to a harvester 33 (in other words, the centrifugal pump 30 is downstream of the PEC 1). The harvester 33 collects ore particles (or nodules) from the sea bed, and water from a second fluid source (in this embodiment local seawater around the nodules). The mixture of the nodules and the sea water comprises the medium 32.

The HOHS 10 also includes a positive displacement pump 34, located at the surface 28 in this embodiment, which is operable to pump a driving fluid 36 through the PEC 1 and in direct contact with the medium 32 so that the medium 32 is displaced from the PEC 1 to the pressurised discharge 20 and from there to the surface 28 via the pumped medium riser 24. However, in other embodiments a different type of pump, or pump arrangement, may be used, or lifting technology that does not use any pumps.

The positive displacement pump 34 is coupled to the driving fluid valve arrangement 14 via a driving fluid riser 38 and a driving fluid inlet line 40.

A driving fluid outlet line 42 connects the PEC 1 (and particularly the pipe 12) to a driving fluid discharge point 44.

The combination of the pipe 12, the driving fluid valve arrangement 14, the pumped medium valve arrangement 16, the driving fluid inlet and outlet lines 40,42, and the medium inlet and outlet lines 31, 29 is referred to herein as an open PEC 1. "Open" refers to the direct contact between the driving fluid 36 and the medium 32. "Pressure exchange" refers to the exchange of pressure between the two different fluids being pumped (driving fluid 36 and medium 32). However, in other embodiments a spacer may be provided between the driving fluid 36 and the medium 32 so that it is an indirect pressure exchange system.

The driving fluid valve arrangement 14 is located at a positive displacement pump end 48 and comprises a driving fluid entry valve 50, a driving fluid exit valve 52, a compression valve 54, a decompression valve 56, a choke valve 57 (which may be in the form of a restriction in the pipe, i.e. a reduced diameter pipe portion), and a master valve actuator 58. The master valve actuator 58 is provided to actuate the various valves 50 to 56 at the correct time for efficient operation of the HOHS 10, as described in PCT/IB2019/055957.

Although not shown in the drawings, the driving fluid entry valve 50 is opened and closed by a hydraulic actuator. Similarly, a hydraulic actuator is paired with each of the driving fluid exit valve 52, the compression valve 54, and the decompression valve 56. Each of these hydraulic actuators is controlled by the master valve actuator 58.

In this embodiment, the master valve actuator 58 comprises a hydraulic power unit, and controls the individual hydraulic actuator in each valve 50,52,54,56, in response to the master valve actuator 58 receiving a command from a system controller 70.

In this embodiment, these valves are all high pressure (for example, greater than 40 Bar) actuated, non-return, poppet seated valves; however, in other embodiments, different types of valves may be used.

To allow the entry 50 and exit 52 valves to open in a generally pressure balanced environment, a pressure balancing line 60 having a restriction (orifice) functioning as the choke valve 57, is provided. This pressure balancing line 60 provides a bypass arrangement by coupling the compression valve 54 to the pipe 12 (bypassing the driving fluid entry valve 50), and coupling the decompression valve 56 to the pipe 12 (bypassing the driving fluid exit valve 52).

The compression valve 54 is provided to bypass the driving fluid entry valve 50 so that the pressure in the pipe 12 can be raised prior to opening of the driving fluid entry valve 50; thereby reducing the force required to open the valve 50 and reducing the fluid flow rate through the driving fluid entry valve 50 upon opening. This has the advantage of prolonging the life of the driving fluid entry valve 50.

Similarly, the decompression valve 56 is provided to bypass the driving fluid exit valve 52 so that the pressure in the pipe 12 can be lowered prior to opening of the driving fluid exit valve 52; thereby preventing high flow rates of the driving fluid 36 through the driving fluid exit valve 52 upon opening thereof.

This limits and controls the flow rate during compression and decompression of the pipe 12, thereby reducing wear in the compression 54 and decompression 56 valves.

The pumped medium valve arrangement 16 is located at delivery end 22 and comprises a pumped fluid exit valve 62 (also referred to as a discharge valve), a pumped fluid entry valve 64 (also referred to as a suction or filling valve), and a master valve actuator 66 to actuate the valves 62, 64 at the appropriate time. The pumped fluid entry 64 and exit 62 valves open in a pressure balanced situation when the PEC 1 is properly decompressed or compressed respectively.

In some embodiments the master valve actuators 58 and 66 can be combined in a single master valve actuator which controls all valve actuators of all actuated valves 50,52,54,56,62,64.

In some embodiments, two choke valves (or restrictions) 57 may be provided, one in series with the compression valve 54 and one in series with the decompression valve 56. Other arrangements are also possible.

The HOHS 10 also includes a system controller 70 for controlling the operation of the entire system, including the pumps 30,34, the valves 50 to 56 and 62 to 64, and the master valve actuators 58,66.

The PD pump 34 needs to be provided with fluid. In this embodiment, a first (surface) fluid source 74 is provided at the surface 28 to provide water for the driving fluid 36. This provides water from the surface 28, which may be sea water in this embodiment. This provides the hydrostatic pressure benefit of using surface water. The fluid source 74 may include a filter for removing large particulates from the fluid prior to providing it to the positive displacement pump 34.

Reference is now also made to Fig. 3, which is a simplified schematic diagram of the harvester 33. The harvester 33 comprises a chassis 76 in which is mounted a movement system 78 (in the form of hydraulic thrusters) operable to move the harvester 33 along a sea bed 79. The chassis 76 defines an aperture 80 at a lower part thereof and aligned with a collection head 82 directed at the sea bed 79 through the aperture 80. The collection head 82 lifts nodules (illustrated (not to scale) by numeral 83) from the sea bed 79 and deposits them in a nodule hopper 84, which effectively performs the slurry preparation function 3 of Fig. 1B. A flexible suction hose 85 couples the nodule hopper 84 to the medium inlet line 31.

The nodule harvester 33 also includes a guidance system 86 that provides navigational information to the hydraulic thrusters 78 to guide it to deposits of nodules. The guidance system 86 may be connected to a transceiver on a surface ship by a wired or wireless connection (illustrated by numeral 90 in Fig. 3).

When the pumped fluid entry (suction) valve 64 is open and the filling pump 30 is operating, the filling pump 30 reduces the pressure in the pipe 12, causing the pressure to drop in the medium inlet line 31 and the flexible suction hose 85, thereby creating hydraulic suction. This, in turn, causes the mixture of nodules 83 and sea water from the nodule hopper 84 (that is, medium 32) to be sucked through the flexible suction hose 85, the medium inlet line 31 and into the pipe 12. This fills up the pipe 12 without the medium 32 coming into contact with the filling pump 30. This reduces any damage to the polymetallic nodules 83 entrained in the sea water. It also has the benefit of avoiding the requirement for a pump on the harvester 33 to feed the pipe 12 with medium 32.

The operation of the HOHS 10 is generally the same as that of prior art HOHS 1, which is described in detail in described in PCT/IB2019/055957.

Initially, there is a decompression step for the pipe 12 to the pressure in the driving fluid outlet line 42, thereby allowing the driving fluid exit valve 52 and the pumped fluid entry valve 64 to be opened. Once decompressed, the chamber 12 is filled with the medium 32, which automatically flows into the pipe 12 due to the operation of the centrifugal (filling) pump 30 reducing the pressure in the pipe 12 (the driving fluid exit valve 52 being in the open position). The filling pump 30 draws (or sucks) out the driving fluid 36 from the pipe 12 through the driving fluid exit valve 52, so that the medium 32 starts to fill the pipe 12 via the suction valve 64. The medium 32 enters the pipe 12 at a relatively high flow rate so the pipe 12 fills relatively rapidly.

Once the pipe 12 is filled, the driving fluid exit valve 52 is closed, thereby stopping the outflow of relatively low pressure driving fluid 36 from the pipe 12 and stopping the inflow of medium 32 to the pipe 12.

The nodules in the medium 32 are allowed to settle to a lower part of the PEC 1 and away from the valve seat of suction valve 64, thereby allowing a better closure of the suction valve 64.

The chamber 12 is then compressed to the pressure in the driving fluid inlet line 40 by allowing high pressure driving fluid 36, delivered by the positive displacement pump 34, to enter the pipe 12 via the compression valve 54 and the pressure balancing line 60.

The driving fluid entry valve 50 and the pumped fluid exit valve 62 are then opened so that high pressure driving fluid 36 flows into the pipe 12 displacing the pressurised medium 32 through the pumped fluid exit valve 62, the medium outlet line 29, the pressurised discharge 20, and partly up the pumped medium riser 24 (depending on the height of the riser 24).

The driving fluid entry valve 50 is then closed, stopping the inflow of driving fluid 36 into the pipe 12, and stopping the outflow of medium 32 from the pipe 12.

Although only a single pipe 12 is illustrated in the HOHS 10 of Fig. 2, in other embodiments a plurality of pressure exchange chambers may be used. For example, in Fig. 4, three PECs 201a, 201b, and 201c are provided in a pressure exchange system 211, and a system controller 270 manages the sequential filling and discharge of the three PECs 201a,b,c to provide a continuous flow of medium 32 to the surface 28.

Each of the three PECs 201a,b,c includes identical valves to those described with reference to the PEC 1 of Fig. 2 (choke valve 57 is not illustrated in Fig. 4 for clarity, but it is included in each PEC 201). Each of the three pressure exchange chambers 201a,b,c, is identical (or at least very similar for all practical purposes) to the PEC 1.

By having multiple PECs 201 arranged in parallel, at least one PEC pipe 212a,b,c is always filled with medium 32 and ready for discharge, thereby allowing a continuous feed of driving fluid 36 to the PECs 201 and a continuous feed of medium 32 to the PECs 201.

Reference is now made to Fig. 5, which is a simplified schematic diagram of another embodiment of an HOHS 310, where the PEC 1 (or pressure exchange system 211 could be used instead of PEC 1 if three pipes are desired) is land based and the pipe 12 (or pipes 212a,b,c) is located beneath an area from which medium is to be pumped. In other words, the medium preparation area is higher than the PEC 1.

The PEC 1 of Fig. 5 is identical to that of Fig. 2, and is located at a low altitude (a sub terranean level) in a mine. However, the medium is prepared by an ore mixer 337 (combining ore with water) on a raised shelf 339 that is at a higher altitude (for example at least 30m higher) than the pipe 12 so that there is an elevated pressure at the medium inlet 35 compared with the static pressure at the ore mixer 337. This ensures that there is sufficient pressure difference to prevent cavitation and thereby allow the filling pump to be installed at the opposite end of the pressure exchange chamber. In other embodiments, the ore mixer 337 may be at least 40m (in some embodiments, at least 50m, in other embodiments at least 100m) above the medium inlet 35. The height selected may depend on the desired reduction in cavitation.

Although the above embodiments have only described a direct pressure exchange chamber, the above teachings could equally be applied to an indirect pressure exchange chamber (that is, one having a separator between the driving fluid and the medium being pumped to the surface).

Similarly, although the above embodiments have only described generally horizontal pressure exchange chambers, the above teachings could equally be applied to vertical, an angled pressure exchange chambers.

Similarly, although the above embodiments have only described a positive displacement pump being used to raise the medium to the surface, other pumps could be used (such as centrifugal pumps).

In other embodiments, the filling pump may be any kind of pump (not just a centrifugal pump) because it only needs to handle a relatively clean driving fluid when it is positioned downstream of the pressure exchange chamber.

The terms "comprising", "including", "incorporating", and "having" are used herein to recite an open-ended list of one or more elements or steps, not a closed list. When such terms are used, those elements or steps recited in the list are not exclusive of other elements or steps that may be added to the list.

Unless otherwise indicated by the context, the terms "a" and "an" are used herein to denote at least one of the elements, integers, steps, features, operations, or components mentioned thereafter, but do not exclude additional elements, integers, steps, features, operations, or components.

The presence of broadening words and phrases such as "one or more," "at least," "but not limited to" or other similar phrases in some instances does not mean, and should not be construed as meaning, that the narrower case is intended or required in instances where such broadening phrases are not used.

### Reference numerals

Pressure Exchange Chamber (PEC) 1, 201a, b, c
Low pressure line 2
Ore slurry preparation 3
riser 4
dewatering location 5
PD pump 6
high pressure line 7
low pressure fluid return line 9.
hydraulic ore hoisting system (HOHS) 10, 310
pipe 12, 212a,b,c
driving fluid valve arrangement 14
pumped medium valve arrangement 16
pressurised discharge 20
delivery end 22
pumped medium riser 24
collection receptacle 26
surface 28
medium outlet (exit) line 29
filling mechanism 30
medium inlet line 31
medium (slurry pumped) 32
nodule harvester 33
positive displacement pump 34
medium inlet 35
driving fluid 36
driving fluid riser 38
driving fluid inlet line 40
driving fluid outlet (exit) line 42
driving fluid discharge point 44
positive displacement pump end 48
driving fluid entry valve 50
driving fluid exit (outlet) valve 52
compression valve 54
decompression valve 56
choke valve 57
master valve actuator (for valves 50 to 56) 58
pressure balancing line 60
pumped fluid exit valve 62
pumped fluid entry valve 64
master valve actuator (for valves 60, 62) 66
system controller 70, 270
surface fluid source 74
harvester chassis 76
movement system (hydraulic thrusters) 78
sea bed 79
chassis aperture 80
collection head 82
nodules 83
nodule hopper 84
flexible suction hose 85
guidance system 86
guidance system to transceiver connection 90
pressure exchange system 211
system controller 270
ore mixer 337
raised shelf 339

## Claims

1. A pumping system (10, 310) for pumping a medium (32) comprising ore suspended in carrier fluid from an underground or underwater location to a surface (28) at a raised level, the system comprising:
(i) at least one pressure exchange chamber (1, 201) comprising a fluid container (12, 212) having a valve arrangement (14, 16) at each end and being located at a lower altitude than the raised level;
(ii) a medium inlet (35) at one end of the chamber (1, 201) operable to receive a low pressure medium (32) for transport into the chamber (1, 201); **characterised by**
(iii) a filling pump (30) located at an opposite side of the chamber (1, 201) to the medium inlet (35), and being operable to draw medium (32) from the medium inlet (35) at low pressure, through the chamber (1, 201), and towards the filling pump (30) to fill the chamber (1, 201) without the medium (32) in the chamber (1, 201) having come into contact with the filling pump (30).

2. A pumping system according to claim 1, wherein the fluid container (12, 212) comprises an elongate pipe.

3. A pumping system according to claim 1 or 2, wherein the filling pump (30) comprises a centrifugal pump.

4. A pumping system according to any preceding claim, wherein the pumping system comprises a plurality of pressure exchange chambers (201a,b,c), each successively filled with the medium (32).

5. A pumping system according to any preceding claim, wherein a first valve arrangement (14) is located at one end of the pressure exchange chamber (1, 201) and comprises a driving fluid entry valve (50), a driving fluid exit valve (52), a compression valve (54), and a decompression valve (56); and a second valve arrangement (16) is located at an end of the pressure exchange chamber (1, 201) near to a pressurised discharge (20) and comprises a medium discharge valve (62) and a medium filling valve (64).

6. A pumping system according to any preceding claim, wherein the pressure exchange chamber includes a separator between driving fluid and the medium being pumped.

7. A pumping system according to any preceding claim, wherein the pressure exchange chamber (1, 201) is located at or near a sea bed.

8. A pumping system according to any of claims 1 to 6, wherein the pressure exchange chamber (1, 201) is located in an underground mine.

9. A pumping system according to claim 7, wherein the pressure exchange chamber (1, 201) is fed from a medium supply located at a higher altitude than the pressure exchange chamber (1, 201).

10. A method of filling a pressure exchange chamber fluid container (12, 212) located at a low altitude and having a medium inlet (35) coupled to one end of the fluid container (12, 212) and a driving fluid outlet (42) coupled to the other end of the fluid container (12, 212), the method comprising:
(i) opening a medium entry valve (64) at the medium inlet (35) to fill the fluid container (12, 212); **characterised by**
(ii) using a filling pump (30) located at an opposite end of the pressure exchange chamber (1, 201) to the medium inlet (35) to create a lower pressure at the driving fluid outlet (42) of the fluid container (12, 212) than at the medium inlet (35) of the fluid container (12, 212) to draw in medium (32) through the medium inlet (35) without the medium (32) in the fluid container (12, 212) coming into contact with the filling pump (30); and
(iii) closing a valve (52 or 64) to stop the intake of medium (32) to the fluid container (12, 212).

11. A method according to claim 10, wherein closing the valve is implemented prior to the medium (32) reaching the filling pump (30) to prevent the filling pump (30) from breaking down the medium (32).

12. An hydraulic ore hoisting system including the pumping system according to any of claims 1 to 9.

## Patentansprüche

1. Pumpsystem (10, 310) zum Pumpen eines Mediums (32), das ein Erz in einem Trägerfluid suspendiert aufweist, aus einem unterirdischen oder Unterwasserstandort zu einer Oberfläche (28) auf einem erhöhten Niveau, wobei das System Folgendes aufweist:
(i) mindestens eine Druckaustauschkammer (1, 201), die einen Fluidbehälter (12, 212) mit einer Ventilanordnung (14, 16) an jedem Ende aufweist und sich in einer geringeren Höhe als das erhöhte Niveau befindet;
(ii) einen Mediumeinlass (35) an einem Ende der Kammer (1, 201), der betreibbar ist, um ein Niederdruckmedium (32) zum Transport in die Kammer (1, 201) aufzunehmen; **gekennzeichnet durch**
(iii) eine Füllpumpe (30), die an einer der Kammer (1, 201) gegenüberliegenden Seite des Mediumeinlasses (35) angeordnet und betreibbar ist, um Medium (32) aus dem Mediumeinlass (35) mit niedrigem Druck durch die Kammer (1, 201) und in Richtung der Füllpumpe (30) zum Füllen der Kammer (1, 201) zu saugen, ohne dass das Medium (32) in der Kammer (1, 201) mit der Füllpumpe (30) in Kontakt gelangt.

2. Pumpsystem nach Anspruch 1, wobei der Fluidbehälter (12, 212) ein längliches Rohr aufweist.

3. Pumpsystem nach Anspruch 1 oder 2, wobei die Füllpumpe (30) eine Zentrifugalpumpe aufweist.

4. Pumpsystem nach einem vorhergehenden Anspruch, wobei das Pumpsystem eine Mehrzahl von Druckaustauschkammern (201a, b, c) aufweist, die jeweils nacheinander mit dem Medium (32) gefüllt werden.

5. Pumpsystem nach einem vorhergehenden Anspruch, wobei eine erste Ventilanordnung (14) an einem Ende der Druckaustauschkammer (1, 201) angeordnet ist und ein Antriebsfluideintrittsventil (50), ein Antriebsfluidauslassventil (52), ein Kompressionsventil (54) und ein Dekompressionsventil (56) aufweist; und eine zweite Ventilanordnung (16) an einem Ende der Druckaustauschkammer (1, 201) in der Nähe eines Druckauslasses (20) angeordnet ist und ein Mediumauslassventil (62) und ein Mediumfüllventil (64) aufweist.

6. Pumpsystem nach einem vorhergehenden Anspruch, wobei die Druckaustauschkammer einen Separator zwischen Antriebsfluid und dem zu pumpenden Medium aufweist.

7. Pumpsystem nach einem vorhergehenden Anspruch, wobei die Druckaustauschkammer (1, 201) auf dem Meeresboden oder in dessen Nähe angeordnet ist.

8. Pumpsystem nach einem der Ansprüche 1 bis 6, wobei die Druckaustauschkammer (1, 201) in einer unterirdischen Mine angeordnet ist.

9. Pumpsystem nach Anspruch 7, wobei die Druckaustauschkammer (1, 201) von einer Mediumversorgung gespeist wird, die in einer höheren Höhe als die Druckaustauschkammer (1, 201) angeordnet ist.

10. Verfahren zum Füllen eines Druckaustauschkammerfluidbehälters (12, 212), der sich in einer niedrigen Höhe befindet und einen Mediumeinlass (35), der mit einem Ende des Fluidbehälters (12, 212) gekoppelt ist, und einen Antriebsfluidauslass (42), der mit dem anderen Ende des Fluidbehälters (12, 212) gekoppelt ist, aufweist, wobei das Verfahren Folgendes aufweist:
(i) Öffnen eines Mediumeintrittsventils (64) an dem Mediumeinlass (35), um den Fluidbehälter (12, 212) zu füllen; **gekennzeichnet durch**:
(ii) Verwenden einer Füllpumpe (30), die an einem dem Mediumeinlass (35) gegenüberliegenden Ende der Druckaustauschkammer (1, 201) angeordnet ist, um einen niedrigeren Druck an dem Antriebsfluidauslass (42) des Fluidbehälters (12, 212) als an dem Mediumeinlass (35) des Fluidbehälters (12, 212) zu erzeugen, um Medium (32) durch den Mediumeinlass (35) zu saugen, ohne dass das Medium (32) in dem Fluidbehälter (12, 212) mit der Füllpumpe (30) in Kontakt gelangt; und
(iii) Schließen eines Ventils (52 oder 64) zum Stoppen des Einlassens von Medium (32) in den Fluidbehälter (12, 212).

11. Verfahren nach Anspruch 10, wobei das Schließen des Ventils durchgeführt wird, bevor das Medium (32) die Füllpumpe (30) erreicht, um zu verhindern, dass die Füllpumpe (30) das Medium (32) aufbricht.

12. Hydraulisches Erzfördersystem, das das Pumpsystem nach einem der Ansprüche 1 bis 9 aufweist.

## Revendications

1. Système de pompage (10, 310) pour pomper un milieu (32) comprenant du minerai en suspension dans un fluide porteur d'un emplacement souterrain ou sous-marin jusqu'à une surface (28) à un niveau surélevé, le système comprenant :
(i) l'au moins une chambre d'échange de pression (1, 201) comprenant un récipient de fluide (12, 212) ayant un agencement de soupape (14, 16) à chaque extrémité et étant situé à une altitude inférieure au niveau élevé ;
(ii) une entrée de milieu (35) à une extrémité de la chambre (1, 201) pouvant fonctionner pour recevoir un milieu à basse pression (32) pour le transport dans la chambre (1, 201) ; **caractérisé par**
(iii) une pompe de remplissage (30) située sur un côté opposé de la chambre (1, 201) par rapport à l'entrée de milieu (35), et pouvant être actionnée pour aspirer le milieu (32) de l'entrée de milieu (35) à basse pression, à travers la chambre (1, 201), et vers la pompe de remplissage (30) pour remplir la chambre (1, 201) sans que le milieu (32) dans la chambre (1, 201) ait été en contact avec la pompe de remplissage (30).

2. Système de pompage selon la revendication 1, dans lequel le récipient de fluide (12, 212) comprend un tuyau allongé.

3. Système de pompage selon la revendication 1 ou 2, dans lequel la pompe de remplissage (30) comprend une pompe centrifuge.

4. Système de pompage selon l'une quelconque des revendications précédentes, dans lequel le système de pompage comprend une pluralité de chambres d'échange de pression (201a, b, c), chacune étant successivement remplie du milieu (32).

5. Système de pompage selon l'une quelconque des revendications précédentes, dans lequel un premier agencement de soupape (14) est situé à une extrémité de la chambre d'échange de pression (1, 201) et comprend une soupape d'entrée de fluide d'entraînement (50), une soupape de sortie de fluide d'entraînement (52), une soupape de compression (54), et une soupape de décompression (56) ; et un deuxième agencement de soupape (16) est situé à une extrémité de la chambre d'échange de pression (1, 201) à proximité d'une décharge sous pression (20) et comprend une soupape de décharge de milieu (62) et une soupape de remplissage de milieu (64).

6. Système de pompage selon l'une quelconque des revendications précédentes, dans lequel la chambre d'échange de pression comprend un séparateur entre le fluide moteur et le milieu pompé.

7. Système de pompage selon l'une quelconque des revendications précédentes, dans lequel la chambre d'échange de pression (1, 201) est située au niveau ou à proximité d'un fond marin.

8. Système de pompage selon l'une quelconque des revendications 1 à 6, dans lequel la chambre d'échange de pression (1, 201) est située dans une mine souterraine.

9. Système de pompage selon la revendication 7, dans lequel la chambre d'échange de pression (1, 201) est alimentée à partir d'une alimentation en milieu située à une altitude plus élevée que la chambre d'échange de pression (1, 201).

10. Procédé de remplissage d'un récipient de fluide de chambre d'échange de pression (12, 212) situé à basse altitude et ayant une entrée de milieu (35) couplée à une extrémité du récipient de fluide (12, 212) et une sortie de fluide d'entraînement (42) couplée à l'autre extrémité du récipient de fluide (12, 212), le procédé comprenant :
(i) l'ouverture d'une soupape d'entrée de milieu (64) au niveau de l'entrée de milieu (35) pour remplir le récipient de fluide (12, 212) ; **caractérisé par** :
(ii) l'utilisation d'une pompe de remplissage (30) située à une extrémité opposée de la chambre d'échange de pression (1, 201) par rapport à l'entrée de milieu (35) pour créer une pression plus faible à la sortie de fluide d'entraînement (42) du récipient de fluide (12, 212) qu'à l'entrée de milieu (35) du récipient de fluide (12, 212) pour aspirer le milieu (32) à travers l'entrée de milieu (35) sans que le milieu (32) dans le récipient de fluide (12, 212) ne vienne en contact avec la pompe de remplissage (30)
(iii) la fermeture d'une soupape (52 ou 64) pour arrêter l'admission de milieu (32) dans le récipient de fluide (12, 212).

11. Procédé selon la revendication 10, dans lequel la fermeture de la soupape est mise en œuvre avant que le milieu (32) n'atteigne la pompe de remplissage (30) pour empêcher la pompe de remplissage (30) de dégrader le milieu (32).

12. Système de levage hydraulique de minerai comprenant le système de pompage selon l'une quelconque des revendications 1 à 9.
